# EUROPEAN PATENT SPECIFICATION

(11) **EP 0 602 138 B1**
(45) Date of publication and mention of the grant of the patent: **22.03.1995**
(21) Application number: 92919049.4
(22) Date of filing: 04.09.1992
(51) Int. Cl.: B60R 19/02, B62D 21/00, B62D 25/02

(54) **STRUCTURAL BEAM AND THE METHOD OF MANUFACTURING SUCH A BEAM**
STRUKTURIERTER TRÄGER UND VERFAHREN ZU SEINER HERSTELLUNG
ELEMENT PROFILE ET PROCEDE DE FABRICATION

(30) Priority: 06.09.1991 NO 913528
(43) Date of publication of application: 22.06.1994
(73) Proprietor: Norsk Hydro a.s., 0257 Oslo 2 (NO)
(72) Inventor: CLAUSEN, Edvin, List, DK-6270 Tonder (DK)
(74) Representative: Bleukx, Luc
(86) International application number: PCT/NO92/00142
(87) International publication number: WO 93/04897

(56) References cited:
- EP-A- 0 425 059
- WO-A-90/02680
- WO-A-91/10582
- DE-A- 4 139 303
- DE-C- 3 144 844
- DE-C- 3 510 590

## Description

The present invention relates to structural members in a vehicle frame and more particularly to elongated structural beams and the method of manufacturing such members (see DE-A-4139303).

A so-called space frame includes a plurality of elongated structural members joined directly together or by means of cast connecting pieces to provide a skeleton forming the total combined body support and lower frame (chassis) of motor vehicles.

In order to satisfy various requirements with regard to the strength and shape (outer configuration) of the structural members, e.g. door pillars or vertical posts of the frame, the pillars are conventionally provided as spot welded deep drawn steel plates composed of two or more components to form the desired configuration with auxiliary or additional features and functions. In the case of door pillars (posts) the shape customarily has a broader lower section and a narrow upper section at the window area.

It is therefore an object of the present invention to provide a novel unitary structural beam exhibiting desired variations in the cross-sectional configuration along its longitudinal axis.

Another object of the invention is to provide a novel low cost method of manufacturing structural beams eliminating the use of time-consuming welding or working operations.

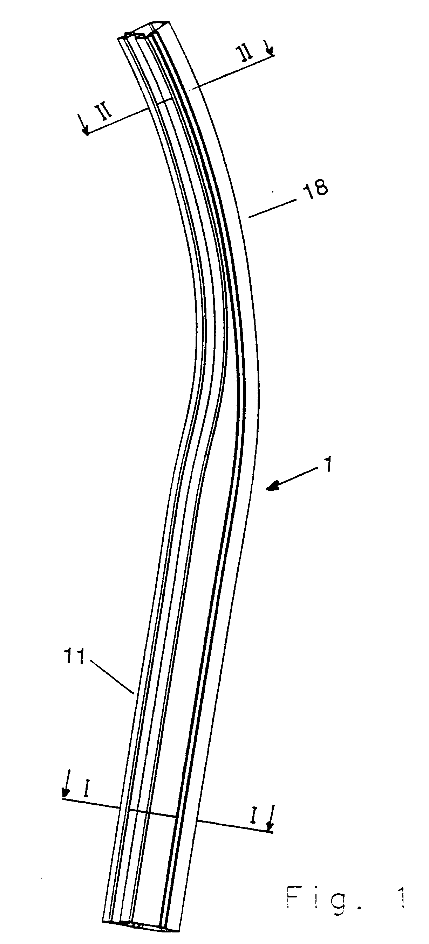

These and other objects and features of the present invention are achieved by provision of a structural beam and manufacturing method of the same, as it appears from the accompanying patent claims and following description of preferred embodiments of the beam referring to the accompanying drawings, Figures 1-5, where
- Fig. 1: is a schematical perspective view of a structural beam according to the invention,
- Fig. 2: illustrates a cross-sectional view of the beam taken along line I-I in Fig.1,
- Fig. 3: shows a reduced cross-sectional area of the beam taken along line II-II in Fig. 1,
- Fig. 4: illustrates another embodiment of the beam exhibiting variations in the cross-sectional area along its longitudinal axis, and
- Fig. 5: illustrates an alternative cross-sectional configuration of the beam in Fig. 4.

Referring to Fig. 1 illustrating by the way of an example the structural beam 1 as a middle door pillar or so-called B-post in a vehicle space frame comprising a lower portion 11 extending substantially lineary and an upper narrow portion 18 being slightly bent to fit the vehicle door contour (not shown in the Figure). The door pillar is provided as an integrated unitary shape extruded ready for use with all features ensuring not only the final functional configuration of the pillar but also facilitating the following manufacturing step resulting in provision of the beam having a variable cross-sectional area along its longitudinal axis. The suitable material for extruding the beam is e.g. aluminium or its alloys or other light metal based materials, e.g. composites having a light metal matrix.

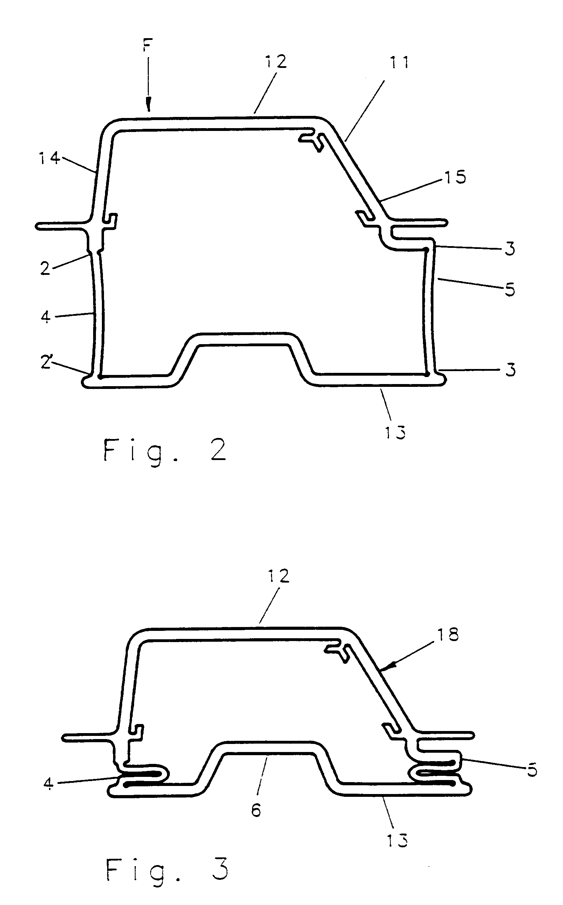

Fig. 2 illustrates the extruded structural beam 1 in a cross-sectional view taken along line I-I in Fig. 1 comprising a closed (box-section) shape 11 having a cavity defined by a pair of substantially parallelly extending walls 12,13 connected by means of transversal side walls 14,15. The transversal side walls 14,15 are provided with grooves 2,2',3,3' defining slightly inadvert (concave) and substantially parallelly extending wall portions 4,5 having preferentially reduced wall thickness compared to the rest of the side walls 14,15.

Applying laterally a compression force F by means of any appropriate conventional pressure or rolling means/apparatus (not shown in the Figure) along a predetermined part of the structural member, the weakened wall portions 4,5 will fold in a controlled manner resulting in provision of a required cross-sectional area (cavity) as illustrated in Fig. 3.

Fig. 3 illustrating the narrow portion 18 of the beam shows that the distance between the parallel walls 12,13 is reduced to a predetermined/requested dimension defined by the height of the folded wall portions 4,5 without affecting the remaining configuration and dimension of the shape, e.g. the longitudinally extending recessed cavity 6 in the bottom wall 12.

Depending on the actually applied deformation means (apparatus) and preformed folding lines/grooves it is possible to alternate the shape (configuration) of the structural member both dimensionally and directionally along its longitudinal axis.

The advantage of the above described manufacturing method is that the structural member could easily in one operation be adapted to the available space and/or to comply with different requests to the function and additional features along its longitudinal extension.

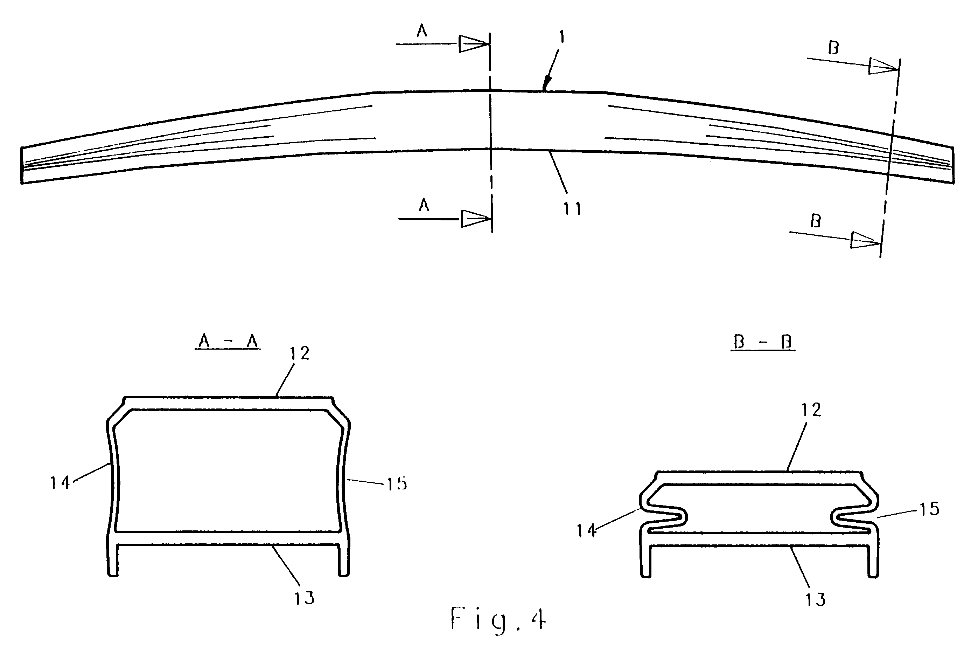

Another example of such structural beam provided according to the present invention is illustrated in Fig. 4 as a bumper 1 for vehicles.

The bumper 1 is shown as a longitudinal unitary extruded member comprising a central part 11 of substantially rectangular and as extruded closed cross-section (see the sectional view A-A) defined by a pair of paralelly extending walls 12,13 connected by transversal side walls 14,15 exhibiting reduced wall thickness. End parts extending on each side of the central part of the reduced cross-sectional area (see view B-B) are formed by gradual folding of the transversal side walls 14,15 and simultaneous bending to provide an outer configuration of the bumper adapted to the vehicle's contour. In order to increase the strength of the bumper the folded side walls 14,15 can be further reinforced, e.g. by means of welding or gluing (not shown in the Figure).

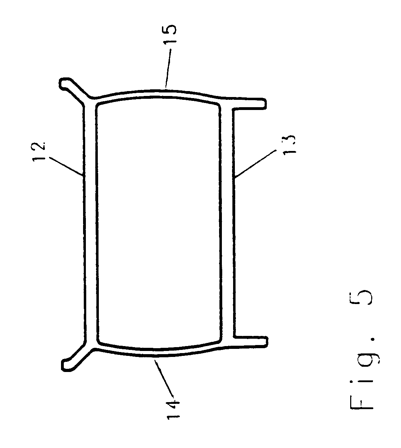

Fig. 5 shows in a cross-sectional view an alternative configuration of the extruded member 1, e.g. the central part 11 in Fig. 4. The transversal side walls 14,15 connecting the parallelly extending walls 12,13 are in this case slightly convex shaped, thus fascilitating outwardly folding of the member to a required reduced cross-sectional area applying pressure or rolling means (not shown in the Figure).

The scope of the present invention is not limited to the above illustrated and described specific embodiments of the invention. Modifications may be made to the invention without departing from the fundamental inventive principle. Thus, e.g. other materials than the above mentioned aluminium (alloys) can be applied and several modifications of the illustrated box section configurations of the beam could be actual for different specific types of application.

## Claims

1. Structural beam, in particular a structural member in a vehicle frame,
**characterized in that**
the structural beam (1) is an integrated unitary extruded shape of closed cross-section exhibiting along its longitudinal axis cavity of variable cross-sectional areas and where reduced cavity areas are defined by at least two substantially parallelly extending folded side walls (14,15) or folded side wall portions (4,5) of the shape.

2. Structural beam according to claim 1,
**characterized in that**
the extruded closed shape comprises at least two substantially inadvert and parallelly extending walls (14,15) or wall portions (4,5) of reduced wall thickness.

3. Structural beam according to claim 1,
**characterized in that**
the extruded closed shape comprises two substantially convex and parallelly extending walls (14,15).

4. Structural beam according to claim 1, 2 or 3,
**characterized in that**
the beam is a door pillar/post in a vehicle space frame.

5. Structural beam according to claim 1, 2 or 3,
**characterized in that**
the beam is a vehicle bumper.

6. Method of manufacturing a structural closed beam, in particular for a vehicle frame,
**characterized in that**
an extruded shape of closed cross-section is laterally exposed over a predetermined part of its longitudinal extension to a deformation pressure resulting in a controlled folding of at least two substantially parallelly extending side walls of the beam or portions of the walls providing a reduced cross-sectional cavity area of the beam.

## Patentansprüche

1. Profilträger, insbesondere Profilelement für ein Fahrzeugrahmenwerk, dadurch gekennzeichnet, daß der Profilträger (1) ein integriertes, aus einem Stück bestehendes, extrudiertes Formstück mit einem geschlossenem Querschnitt ist und entlang seiner Längsachse einen Hohlraum mit variablen Querschnittsflächen aufweist und wobei reduzierte Hohlraumbereiche durch mindestens zwei im wesentlichen parallel verlaufende gefaltete Seitenwände (14, 15) oder gefaltete Seitenwandabschnitte (4, 5) des Formstückes abgegrenzt werden.

2. Profilträger entsprechend dem Patentanspruch 1, dadurch gekennzeichnet, daß das extrudierte geschlossene Formstück mindestens zwei im wesentlichen leicht gebogene und sich parallel erstreckende Wände (14,15) oder Wandabschnitte (4, 5) mit einer abgeschwächten Wandstärke besitzt.

3. Profilträger entsprechend dem Patentanspruch 1, dadurch gekennzeichnet, daß die extrudierte geschlossene Form zwei im wesentlichen konvex und sich parallel erstreckende Wände (14,15) besitzt.

4. Profilträger entsprechend dem Patentanspruch 1, 2 oder 3, dadurch gekennzeichnet, daß der Träger eine Türsäule/einen Türposten in dem Rahmenwerk einer Fahrzeugkarosserie darstellt.

5. Profilträger entsprechend dem Patentanspruch 1, 2 oder 3, dadurch gekennzeichnet, daß der Träger eine Stoßstange eines Fahrzeuges darstellt.

6. Verfahren zur Herstellung eines geschlossenen Profilträgers, insbesondere für eine Fahrzeugkarosserie, dadurch gekennzeichnet, daß ein extrudiertes Formstück mit einem geschlossenem Querschnitt seitlich über einem vorher festgelegten Teil seiner Längsausdehnung einem verformenden Druck ausgesetzt wird, was zu einem kontrollierten Falten von mindestens zwei im wesentlichen parallel verlaufenden Seitenwänden des Trägers oder Teilen der Wände desselben führt und einen Abschnitt mit einer reduzierten Querschnittsfläche des Hohlraumes des Trägers liefert.

## Revendications

1. Poutrelle structurelle, en particulier élément structurel pour châssis de véhicule, caractérisé(e) en ce que la poutrelle structurelle (1) est une pièce façonnée extrudée unitaire intégrée de section transversale fermée présentant le long de son axe longitudinal une cavité de surface en coupe transversale variable et des zones réduites de la cavité sont définies par au moins deux parois latérales pliées (14, 15) ou deux parties de parois latérales pliées (4, 5) sensiblement parallèles de la pièce façonnée.

2. Poutrelle structurelle selon la revendication 1, caractérisée en ce que la pièce façonnée fermée extrudée comprend au moins deux parois (14, 15) ou parties de parois (4, 5) sensiblement concaves et parallèles d'épaisseur de paroi réduite.

3. Poutrelle structurelle selon la revendication 1, caractérisée en ce que la pièce façonnée fermée extrudée comprend deux parois sensiblement convexes et parallèles (14, 15).

4. Poutrelle structurelle selon la revendication 1, 2 ou 3, caractérisée en ce que la poutrelle est un pilier/montant de porte dans un châssis tridimensionnel de véhicule.

5. Poutrelle structurelle selon la revendication 1, 2 ou 3, caractérisée en ce que la poutrelle est un pare-chocs de véhicule.

6. Procédé de fabrication d'une poutrelle structurelle fermée, en particulier pour un châssis de véhicule, caractérisé en ce qu'une pièce façonnée extrudée de section transversale fermée est exposée latéralement, sur une partie prédéterminée de son extension longitudinale, à une pression de déformation, entraînant un pliage contrôlé d'au moins deux parois latérales sensiblement parallèles de la poutrelle ou de parties des parois formant une zone de cavité en coupe transversale réduite de la poutrelle.
